# EUROPÄISCHE PATENTSCHRIFT

(11) **EP 0 827 873 B1**
(45) Veröffentlichungstag und Bekanntmachung des Hinweises auf die Patenterteilung: **16.04.2003**
(21) Anmeldenummer: 97113955.5
(22) Anmeldetag: 13.08.1997
(51) Int. Cl.: B60R 19/02, B62D 25/04, B21D 47/01, B62D 29/00

(54) **Verfahren zur Herstellung eines Trägers**
Method for manufacturing a beam
Procédé de fabrication d'une poutre

(30) Priorität: 22.08.1996 DE 19633907
(43) Veröffentlichungstag der Anmeldung: 11.03.1998
(73) Patentinhaber: Bayerische Motoren Werke Aktiengesellschaft, 80788 München (DE); NORSK HYDRO ASA, 0240 Oslo (NO)
(72) Erfinder: Scheucher, Klaus-Peter, 80799 München (DE); Clausen, Edvin List, 6270 Toender (DE)
(74) Vertreter: Bücken, Helmut

(56) Entgegenhaltungen:
- WO-A-92/11157
- WO-A-93/04897

## Beschreibung

Die Erfindung bezieht sich auf ein Verfahren zur Herstellung eines Trägers nach dem Oberbegriff der Ansprüche 1 und 2.

Karosserien für in Kleinserien produzierte Fahrzeuge werden bevorzugt aus Profilen mit einem über ihrer Länge konstanten Querschnitt hergestellt. Derartige Profile, vor allem Strangprofile aus Leichtmetall, sind bei weitgehend frei zu gestaltenden Querschnitten kostengünstig in ihrer Herstellung.

Aus der EP 0 602 138 B1 ist ein Verfahren zur Herstellung eines Trägers mit variablen Querschnittsflächen bekannt. Der Träger wird beispielsweise als Türpfosten oder Stoßstange eines Fahrzeugs eingesetzt und aus einem Hohlprofil hergestellt, indem durch kontrolliertes Falten von mindestens zwei im wesentlichen parallel verlaufenden Seitenwänden des Hohlprofils eine Reduzierung des Profilquerschnitts erreicht wird. Durch die nach innen umgebogenen Seitenwände ergibt sich jedoch eine relativ geringe Steifigkeit des Trägers gegenüber Biegung und Torsion. Die nach innen gefalteten Seitenwände stellen eine Feder dar, die die Formstabilität des Gesamtträgers beeinträchtigen kann.

Aufgabe der Erfindung ist es, das bekannte Herstellverfahren weiterzubilden.

Diese Aufgabe wird durch die Merkmale des Anspruchs 1 oder 2 gelöst.

Erfindungsgemäß wird die Querschnittsverengung des Profils dadurch erreicht, daß das Profil z. B. durch ein Schneide- oder Fräswerkzeug bereichsweise aufgetrennt wird. Hierdurch entstehen zwei Abschnitte, auf die nachfolgend durch ein Werkzeug nach Art einer Presse in der Weise eine Kraft aufgebracht wird, daß die beiden Abschnitte aufeinander zubewegt werden, wodurch sich der Profilquerschnitt verkleinert. Die Reduzierung des Profilquerschnitts kann über der Länge des Profils unterschiedlich sein, so daß sich aus dem ursprünglich gleichmäßigen Querschnitt beispielsweise ein konischer Verlauf des Trägers ergibt. Es sind jedoch auch andere beliebige Querschnittsveränderungen über der Länge des Profils denkbar.

Die Quetschung kann über die gesamte Längserstreckung des Profils erfolgen oder auf einen Teil davon beschränkt sein.

Gemäß Anspruch 1 wird das Profil aufgetrennt, mit nachfolgender Überlappung der durch die Auftrennung entstandenen Abschnitte.

Bei der alternativen Ausführung der Erfindung nach Anspruch 2 wird das Profil aufgetrennt und zusätzlich so beschnitten, daß die Abschnitte beim nachfolgenden Zusammendrücken des Profilquerschnittes einander nicht überlappen, sondern stumpf aneinanderstoßen. Als Vorteil ergibt sich ein stufenloser Übergang entlang der Verbindungslinie sowie ein niedriges Gewicht. Bei einem sich kontinuierlich verjüngenden Trägerquerschnitt beispielsweise ist ein keilförmiger Ausschnitt aus dem Profil zu entfernen.

Selbstverständlich kann das Profil auch entlang mehrerer Schnittlinien aufgetrennt werden, wodurch sich mehrere Abschnitte ergeben, die ineinander bzw. übereinander geschoben werden bzw. stumpf aneinanderstoßen.

Bei den erfindungsgemäßen Verfahren können Querschnittsveränderungen unabhängig von der Wandstärke des Ausgangsprofils vorgenommen werden. Es sind - im Gegensatz zur EP 0 602 138 B1 - keine Seitenwände mit verringerten Wandstärken erforderlich, die die Tragfähigkeit des Ausgangsprofils reduzieren würden. Durch das Auftrennen mit nachfolgendem Zusammenführen der beiden Abschnitte verbleibt die Tragwand (im Gegensatz zur bekannten Faltung nach innen) außenliegend, so daß sich eine hohe Biege- und Torsionssteifigkeit des Trägers ergibt.

Neben der Quetschung des Profils, das heißt dem Überlappen bzw. dem Zusammenführen der beiden Abschnitte (zur Reduzierung der Querschnittsfläche des Profils) wird das Profil gemäß Anspruch 3 über seinen gesamten Querschnitt zusätzlich gebogen, so daß ein gekrümmter Träger mit veränderlichem Querschnitt entsteht. Die Biegung (zur Erzeugung des gekrümmten Trägerverlaufs) erfolgt dabei bevorzugt, aber nicht notwendigerweise, in einem gemeinsamen Werkzeug zusammen mit der Quetschung des Profils.

Die Biegung kann über die gesamte Längserstreckung des Profils erfolgen oder auf einen Teil davon beschränkt sein.

Durch die Weiterbildung des Verfahrens nach Anspruch 4 kann mit einer einfach durchzuführenden zweidimensionalem Biegung des Profils in Kombination mit der Querschnittsveränderung ein dreidimensionaler Verlauf der Kontur des Trägers erreicht werden. Das Verfahren nach Anspruch 4 ist insbesondere bei solchen Profilen von Vorteil, die nicht oder nur mit großem Aufwand räumlich gebogen werden können, beispielsweise bei stranggepreßten Hohlprofilen (siehe Ansprüche 12 und 13).

Durch die nachfolgende Verbindung der Abschnitte nach Anspruch 5 wird eine hohe Maßhaltigkeit und Steifigkeit des Trägers erreicht. Um ein Auffedern des Profils bei der Entnahme aus dem Preßwerkzeug, das die Querschnittsform des Profils verändert, zu verhindern, kann das Profil mit Überlänge in das Werkzeug eingelegt werden, so daß die überstehenden Endabschnitte bei noch geschlossenem Werkzeug geheftet und anschließend entlang der Längserstreckung des Profils endgültig miteinander verbunden werden können.

Besonders vorteilhaft ist das Verfahren nach Anspruch 6, da durch entsprechende Formgebung des Profils sich die beiden Abschnitte (ohne einen zusätzlichen Verfahrensschritt zur Aufweitung des Profils) überlappen können.

Gemäß Anspruch 7 wird bei dem auf Anspruch 1 basierenden Verfahren das Profil nicht nur aufgetrennt, sondern dabei auch so beschnitten, daß im Bereich der Überlappung der beiden Abschnitte Material entfernt wird, um eine gleichmäßige Überlappungsbreite zu erreichen. Bei einem gewünschten kontinuierlich konischen Verlauf des Trägers beispielsweise erfolgt ein schräg verlaufender Beschnitt. Durch das Beschneiden wird eine unnötig oder unerwünscht große Materialstärke vermieden. Hierdurch kann das Gewicht des Trägers gesenkt werden. Außerdem wird eine gleichmäßige Wandstärke ohne Steifigkeitssprünge erreicht.

Durch die Verschweißung nach Anspruch 8 wird eine gleichmäßig tragende Verbindung erreicht, die zudem den Hohlraum des Trägers abdichtet. Bei einer Überlappung der Abschnitte ist eine schweißtechnisch besonders einfach und sicher anzubringende Kehlnaht möglich. Bei der Verschweißung mittels einer Kehlnaht und insbesondere bei stumpfer Verschweißung kann die Schweißnaht mit nur geringem Aufwand so nachbearbeitet werden, daß der Träger auch als sichtbares Bauteil der Außenfläche der Fahrzeugkarosserie eingesetzt werden kann.

Durch die Ausbildung des Verfahrens nach Anspruch 9 wird das Profil in dem Bereich mit zu veränderndem Querschnitt in zwei Hälften geteilt, die in besonders einfacher Weise ineinander bzw. übereinander geschoben werden können. Selbstverständlich läßt sich das Verfahren sinngemäß auch auf Träger mit stumpf aneinanderstoßenden Profilabschnitten anwenden.

Mit dem Verfahren nach Anspruch 10 ist es möglich, einen Träger zu formen, der in sich räumlich verdreht ist. In Verbindung mit einer zusätzlichen Biegung des Trägers kann ein gekrümmter Träger mit räumlicher Verdrehung, wie er beispielsweise bei der A-Säule einer Kraftfahrzeugkarosserie vorliegt, hergestellt werden. Die räumliche Verdrehung ermöglicht einen über der Längserstreckung der A-Säule veränderlichen Winkel für die Anlage der Windschutzscheibe. Ein derartiger Träger kann allein durch Biegen eines Profils nicht hergestellt werden. Außerdem erfordert das Verfahren nach Anspruch 10 nur eine einzige Trennlinie, entlang derer nachfolgend die beiden Abschnitte miteinander verbunden werden.

Nach Anspruch 11 wird die Biegung durch einen Bereich geringerer Materialstärke im Profilquerschnitts erleichtert, der als definierte Biegezone wirkt.

Wie bereits eingangs erläutert, ist eine bevorzugte Anwendung des erfindungsgemäßen Herstellverfahrens die Verwendung von Strangprofilen, insbesondere aus Aluminiumlegierungen (Anspruch 12).

Hohlprofile mit zwei oder mehr Kammern (Anspruch 13) sind hierbei in besonderer Weise geeignet. Bei Zweikammerprofilen wird beispielsweise eine der beiden Kammern aufgetrennt und gibt dem Profil die veränderliche Querschnittsform, während die andere Kammer sich über die gesamte Länge des Trägers durchgehend erstreckt und somit für die nötige Steifigkeit und Festigkeit sorgt.

Hohlprofile können in einfacher Weise in einer Ebene gebogen werden, so daß sich in Kombination mit der Querschnittsveränderung eine dreidimensional gekrümmte Kontur des Trägers ergibt. Diese Kontur kann gemäß Anspruch 14 in vorteilhafter Weise bei Säulen von Kraftfahrzeugen eingesetzt werden. So ergibt sich beispielsweise mit einem erfindungsgemäß hergestellten oberen Abschnitt einer A-Säule eines Kraftfahrzeugs eine dreidimensionale Anschlußfläche für eine Windschutzscheibe. In analoger Weise können sich an Säulen z. B. Außenhautoder Verkleidungsteile anschließen.

Mögliche Ausführungsformen der Erfindung sind nachfolgend in der Zeichnung dargestellt und erläutert. Es zeigt:
- Fig. 1: einen Querschnitt eines ersten erfindungsgemäß hergestellten Trägers,
- Fig. 2: eine der Fig. 1 entsprechende Darstellung eines zweiten Trägers und
- Fig. 3: eine perspektivische Darstellung eines erfindungsgemäß hergestellten dritten Trägers mit einem in die Zeichenebene eingeklappten Profilquerschnitt.

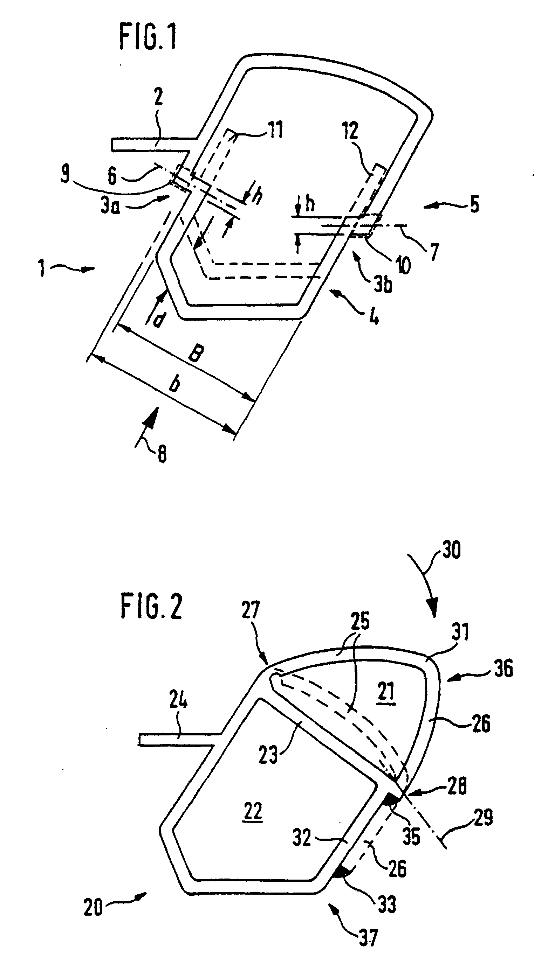

Das mit durchgezogenen Linien dargestellte Profil 1 gemäß Fig. 1 ist ein einstückiges Hohlprofil, das beispielsweise aus einer Aluminiumlegierung besteht und im Strangpreßverfahren hergestellt ist. Es weist einen seitlich abstehenden Flansch 2 sowie beidseitig einen Absatz 3a bzw. 3b auf, der das Profil in zwei im wesentlichen U-förmige Hälften 4 und 5 unterteilt.

Zur Herstellung eines Trägers, der von dem Profil 1 gebildet wird und über seine Länge eine veränderliche Querschnittsform aufweist, wird das Profil 1 an den Trennlinien 6 und 7 mit einem Schneidwerkzeug durchtrennt. Die hierbei jeweils entfernte Materialstärke entspricht mindestens der Höhe h der Absätze 3a, b, so daß die beiden Profilhälften 4 und 5 nicht nur über die Länge des Schnittes vollständig voneinander getrennt sind, sondern auch eine unterschiedliche Breite aufweisen. Hierbei ist das Außenmaß B des ersten Abschnitts 4 kleiner oder gleich dem Innenmaß b des zweiten Abschnitts 5.

Hieran schließen sich die Seiten 6 bis 8 der ursprünglich eingereichten Unterlagen an. Anstelle des Schnittes entlang der Trennlinien 6 und 7 ist es beispielsweise ebenso möglich, die in Figur 1 strichliert dargestellten Bereiche 9 und 10 des Profils 1 zu entfernen.

Anschließend wird das auf diese Weise über einen Teil seiner Länge beidseitig geschlitzte Profil 1 in eine nicht dargestellte Vorrichtung eingelegt. Die Vorrichtung weist einen feststehenden und einen bewegbaren Teil für die Abschnitte 5 bzw. 4 auf. Durch entsprechende Kraftbeaufschlagung des bewegbaren Vorrichtungsteils wird die erste Profilhälfte 4 in Richtung des Pfeils 8 in das Innere der zweiten Profilhälfte 5 geschoben. Die strichlierten Linien geben die Lage der ersten Profilhälfte 4 nach beendeter Verformung des Profils 1 an. Die Verformung erfolgt beispielsweise derart, daß sich ausgehend vom Beginn des Trennschnittes eine konstante Querschnittsverengung bis zum Endabschnitt des Profils 1 ergibt. Die maximale Verschiebung ist mit d bezeichnet. Die Schnittkanten an den Trennlinien 6 und 7 des zweiten Abschnitts 5 werden über nicht dargestellte Schweißnähte mit den Außenseiten der Wände 11 und 12 des ersten Abschnitts 4 verbunden. Die Schweißnähte des erfindungsgemäß hergestellten Trägers verlaufen demnach entlang des Bereichs der ursprünglichen Absätze 3a, b.

In Fig. 2 ist ein Profil 20 dargestellt, dessen Hohlraum durch eine Trennwand 23 in zwei Kammern 21 und 22 unterteilt ist. Außenseitig ist wiederum ein Flansch 24 angeordnet. Die durchgezogenen Linien geben den Ausgangszustand des Profils 20 wieder. Die erste Kammer 21 wird von zwei Wänden 25 und 26 sowie der Trennwand 23 begrenzt. Die Wände 25 und 26 sind über einen Eckabschnitt 31 miteinander verbunden und bilden einen ersten Profilabschnitt 36, der über eine Stelle 27 geringerer Materialstärke mit dem zweiten Profilabschnitt 37, der die Kammer 22 des Profils 20 umschließt, verbunden ist. An die Wand 26 grenzt eine Wand 32 des zweiten Profilabschnitts 37 an. Der Übergang erfolgt über einen Absatz 28.

Zur Herstellung eines Trägers, der über seine Länge einen unterschiedlichen Querschnittsverlauf aufweist, wird das Profil 20 an der Trennlinie 29 aufgetrennt, indem der Absatz 28 entfernt wird. Hierdurch entsteht einseitig ein Spalt zwischen den beiden Abschnitten 36 und 37. Nach dem Einlegen des Profils 20 in eine nicht dargestellte Vorrichtung wird durch Aufbringen einer Kraft in Richtung des Pfeils 30 der erste Abschnitt 36 zum zweiten Abschnitt 37 hin gedrückt. Die Querschnittsverengung 27 wirkt hierbei als definierte Biegekante, so daß der erste Abschnitt 36 als Ganzes zum restlichen Profil hin gebogen wird. Dabei gleitet die Wand 26 an der Wand 32 entlang, während sich die Wand 25 der Trennwand 23 annähert. Die gestrichelten Linien in Fig. 2 geben die Endlage des ersten Abschnitts 36 an, bei der der Eckabschnitt 31 im Bereich des entfernten Absatzes 28 zu liegen kommt. Die abschließende Verbindung zwischen der Wand 26 und der Wand 32 erfolgt über eine Schweißnaht 33, die als Kehlnaht an die Schnittkante des ersten Abschnittes 36 gelegt wird.

Die in Fig. 2 zusätzlich eingezeichnete Schweißnaht 35 beschreibt eine weitere Ausführungsform der Erfindung, bei der die Wand 26 entlang der Profilerstreckung schräg beschnitten und dabei ein keilförmiger Ausschnitt entfernt wird. Durch diesen Beschnitt verläuft die Schweißnaht 35 - im Gegensatz zur Schweißnaht 33 - über die gesamte beschnittene Länge des Profils 20 etwa im Bereich des ursprünglichen Absatzes 28. Hierdurch wird eine unnötige Materialanhäufung im Überlappungsbereich zwischen den Wänden 26 und 32 vermieden.

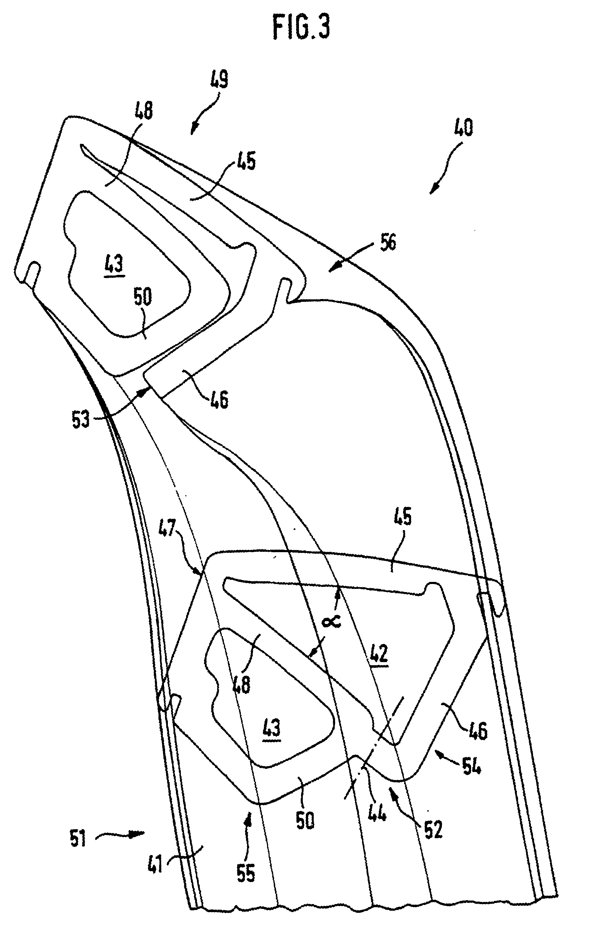

Die perspektivische Darstellung der Fig. 3 zeigt besonders anschaulich einen in seiner Gesamtheit mit 40 bezeichneten Träger, der von einem Strangprofil 41 aus einer Aluminiumlegierung gebildet wird. Es handelt sich hierbei beispielsweise um den oberen Teil einer A-Säule eines Kraftfahrzeuges. Der Träger 40 besitzt in seinem unteren Teil 51 einen konstanten Profilquerschnitt, der durch eine Trennwand 48 in zwei Kammern 42 und 43 unterteilt wird. Durch Auftrennen der ersten Kammer 42 an der Trennstelle 44 wird ein erster, etwa L-förmiger Abschnitt 54 von einem zweiten, die Kammer 43 umschließenden Abschnitt 55, getrennt. Hierbei wird ein Absatz 52, der etwa in Verlängerung der Trennwand 48 verläuft, entfernt. Nachfolgend wird der von den Wänden 45 und 46 gebildete Abschnitt 54 entlang einer Linie 47 mit etwas geringerer Materialstärke zum zweiten Abschnitt 55 hin gebogen. Der Winkel ∝ zwischen der Wand 45 und der Trennwand 48 verringert sich hierbei kontinuierlich in Richtung des oberen Endabschnittes 49 des Trägers 40, bis die beiden Wände 45 und 48 nahezu aneinanderliegen. In gleichem Maße wird die Wand 46 zunehmend über die an den ursprünglichen Absatz 48 angrenzende Wand 50 des zweiten Abschnitts 55 geschoben. Im Bereich des oberen Endabschnitts 49 besteht der Träger 40 quasi aus einem Profil 41 mit nur mehr einer Kammer 42. Die Wände 46 und 50 werden durch eine nicht dargestellte Schweißnaht an der Schnittkante 53 der Wand 46 miteinander verbunden.

Der erfindungsgemäß hergestellte Träger 40 weist trotz der nur in einer Ebene erfolgten Biegung des Strangprofils 41 an der Außenseite 56 der Wand 45 eine dreidimensional verlaufende Anschlußfläche für eine Windschutzscheibe auf.

## Patentansprüche

1. Verfahren zur Herstellung eines Trägers mit einem über seiner Längserstreckung zumindest abschnittsweise unterschiedlichen Querschnitt unter Verwendung eines Profils mit einem über seiner Längserstreckung konstanten Querschnitt,
**gekennzeichnet durch** die folgenden Verfahrensschritte:
1. Das Profil (1, 20, 41) wird im Bereich der gewünschten Querschnittsabweichung entlang wenigstens einer in Längsrichtung des Profils (1, 20, 41) verlaufenden Trennlinie (6, 7; 29; 44) aufgetrennt und hierdurch in wenigstens zwei Abschnitte (4, 5; 36, 37; 54, 55) unterteilt.
2. Auf die Abschnitte (4, 5; 36, 37; 54, 55) wird relativ zueinander eine Kraft aufgebracht, so daß die Abschnitte (4, 5; 36, 37; 54, 55) überlappend ineinander bzw. übereinander geschoben werden.

2. Verfahren zur Herstellung eines Trägers mit einem über seiner Längserstreckung zumindest abschnittsweise unterschiedlichen Querschnitt unter Verwendung eines Profils mit einem über seiner Längserstreckung konstanten Querschnitt,
**gekennzeichnet durch** die folgenden Verfahrensschritte:
1. Das Profil wird im Bereich der gewünschten Querschnittsabweichung entlang wenigstens einer in Längsrichtung des Profils verlaufenden Trennlinie aufgetrennt und entsprechend der gewünschten Querschnittsveränderung beschnitten, wodurch wenigstens zwei Abschnitte entstehen.
2. Auf die Abschnitte wird relativ zueinander eine Kraft aufgebracht, so daß die Abschnitte an ihren Trenn- bzw. Schnittlinien aneinanderstoßen.

3. Verfahren nach Anspruch 1 oder 2,
**dadurch gekennzeichnet, daß** das Profil (1, 20, 41) einem den gesamten Profilquerschnitt erfassenden Biegevorgang unterworfen wird.

4. Verfahren nach einem der vorangegangenen Ansprüche,
**dadurch gekennzeichnet, daß** der Biegevorgang in einer einzigen Ebene erfolgt.

5. Verfahren nach einem der vorangegangenen Ansprüche ,
**dadurch gekennzeichnet, daß** in einem weiteren Verfahrensschritt die Abschnitte (4, 5; 36, 37; 54, 55) im Bereich der Trennlinie(n) (6, 7; 29; 44) bzw. der Trenn- und Schnittlinien miteinander verbunden werden.

6. Verfahren nach einem der vorangegangenen Ansprüche ,
**dadurch gekennzeichnet, daß** das Profil (1, 20, 41) entlang der Trennlinie (6, 7; 29; 44) einen Absatz (3a, b; 28; 52) aufweist, der in Trägerquerrichtung einen Versatz der beiden Abschnitte (4, 5; 36, 37; 54, 55) erzeugt, wobei der Absatz (3a, b; 28; 52) durch das Auftrennen des Profils (1, 20, 41) entfernt wird.

7. Verfahren nach einem der vorangegangenen Ansprüche mit Ausnahme von Anspruch 2,
**dadurch gekennzeichnet, daß** der den jeweils anderen Abschnitt (4, 37, 55) überlappende Bereich des einen Abschnitts (5, 36, 54) zumindest teilweise entfernt wird.

8. Verfahren nach einem der vorangegangenen Ansprüche,
**dadurch gekennzeichnet, daß** die Abschnitte (4, 5; 36, 37; 54, 55) entlang der Trennlinie (6, 7; 29; 44) bzw. der Trenn- und Schnittlinien miteinander verschweißt werden.

9. Verfahren nach einem der vorangegangenen Ansprüche,
**dadurch gekennzeichnet, daß** das Profil (1) entlang zweier Trennlinien (6, 7) an etwa gegenüberliegenden Wandbereichen des Profils (1) aufgetrennt wird, d. h. das Profil (1) in zwei Abschnitte (4, 5) geteilt wird, und nachfolgend die beiden Abschnitte (4, 5) entlang beider Trennlinien (6, 7) ineinander bzw. übereinander geschoben werden.

10. Verfahren nach einem der Ansprüche 1 bis 8,
**dadurch gekennzeichnet, daß** das Profil (20, 41) entlang einer Trennlinie (29, 44) aufgetrennt und ein Abschnitt (36, 54) zum anderen Abschnitt (37, 55) hin gebogen wird.

11. Verfahren nach Anspruch 10,
**dadurch gekennzeichnet, daß** das Profil (20, 41) einen begrenzten Bereich geringeren Querschnitts (27, 47) aufweist, der als Biegezone für einen der Abschnitte (36, 54) wirkt.

12. Verfahren nach einem der vorangegangenen Ansprüche,
**dadurch gekennzeichnet, daß** der Träger (40) ein Strangprofil aus Leichtmetall ist.

13. Verfahren nach Anspruch 12,
**dadurch gekennzeichnet, daß** der Träger (40) ein Strangprofil (41) mit wenigstens zwei Kammern (42, 43) ist.

14. Verfahren nach einem der vorangegangenen Ansprüche,
**dadurch gekennzeichnet, daß** der Träger (40) eine Säule eines Kraftfahrzeug-Aufbaus bildet.

## Claims

1. A method of producing a bearer, beam or the like having a cross-section which varies at least in portions along its length, using a profile having a constant cross-section along its length,
**characterised by** the following steps:
1. the profile (1, 20, 41), in the region of the desired change in cross-section, is cut along at least one parting line (6, 7; 29; 44) in the longitudinal direction of the profile (1, 20, 41) and thus divided into at least two portions (4, 5; 36, 37; 54, 55),
2. a force is applied to the portions (4, 5; 36, 37; 54, 55) relative to one another, so that the portions (4, 5; 36, 37; 54, 55) overlap and are pushed into or over one another.

2. A method of producing a bearer, beam or the like having a cross-section which varies at least in portions along its length, using a profile having a constant cross-section along its length,
**characterised by** the following steps:
1. at the place where a different cross-section is required, the profile is cut along at least one parting line in the longitudinal direction of the profile and trimmed in accordance with the desired change in cross-section, resulting in at least two portions,
2. a force is applied to the portions relative to one another, so that the portions abut at the parting or cutting lines.

3. A method according to claim 1 or claim 2,
**characterised in that** the profile (1, 20, 41) is subjected to a bending operation covering the entire profile cross-section.

4. A method according to any of the preceding claims,
**characterised in that** the bending operation is performed in a single plane.

5. A method according to any of the preceding claims,
**characterised in that** in another process step the portions (4, 5; 36, 37; 54, 55) are joined in the region of the parting line or lines (6, 7; 29; 44) or of the parting and cut lines.

6. A method according to any of the preceding claims,
**characterised in that** along the parting line (6, 7; 29; 44) the profile (1, 20, 41) has a shoulder (3a, b; 28; 52) which produces an offset between the two portions (4, 5; 36, 37; 54, 55) in the transverse direction of the bearer, the shoulder (3a, b; 28; 52) being removed by cutting the profile (1, 20, 41) apart.

7. A method according to any of the preceding claims except for claim 2,
**characterised in that** the region of one portion (5, 36, 54) overlapping the other portion (4, 37, 55) is at least partly removed.

8. A method according to any of the preceding claims,
**characterised in that** the portions (4, 5; 36, 37; 54, 55) are welded to one another along the parting line (6, 7; 29; 44) or along the parting and cut lines.

9. A method according to any of the preceding claims,
**characterised in that** the profile (1) is cut along two parting lines (6, 7) at approximately opposite wall regions of the profile (1), i.e. the profile (1) is divided into two portions (4, 5), after which the two portions (4, 5) are pushed into or over one another along the two parting lines (6, 7).

10. A method according to any of claims 1 to 8,
**characterised in that** the profile (20, 41) is cut along a parting line (29, 44) and one portion (36, 54) is bent towards the other portion (37, 55).

11. A method according to claim 10,
**characterised in that** the profile (20, 41) has a limited region with a smaller cross-section (27, 44), serving as a bending zone for one of the portions (36, 54).

12. A method according to any of the preceding claims,
**characterised in that** the bearer (40) is a light-metal extruded profile.

13. A method according to claim 1 2,
**characterised in that** the bearer (40) is an extruded profile (41) with at least two chambers (42, 43).

14. A method according to any of the preceding claims,
**characterised in that** the bearer (40) is a column of a motor-vehicle body.

## Revendications

1. Procédé de fabrication d'une poutre ayant une section différente au moins par segments sur son extension longitudinale, à partir d'un profilé ayant une section constante sur sa longueur,
**caractérisé par** les étapes suivantes :
1. On ouvre le profil (1, 20, 41) au niveau de la variation souhaitée de section le long d'au moins une ligne de coupe (6, 7 ; 29 ; 44) dirigée dans la direction longitudinale du profil (1, 20, 41) et on le subdivise ainsi en au moins deux segments (4, 5 ; 36, 37 ; 54, 55),
2. On exerce sur les segments (4, 5 ; 36, 37 ; 54, 55) des forces dirigées l'une contre l'autre pour que les segments (4, 5 ; 36, 37 ; 54, 55) viennent l'un dans l'autre ou se chevauchent l'un l'autre.

2. Procédé de fabrication d'une poutre avec une section variable au moins en partie sur sa longueur, en utilisant un profil ayant une section constante suivant sa longueur,
**caractérisé par** les étapes suivantes :
1. On ouvre le profil au niveau de la variation de section souhaitée, le long d'au moins une ligne de coupe dirigée dans la direction longitudinale du profilé et on coupe en fonction de la variation de section souhaitée donnant au moins deux segments,
2. On exerce sur les segments une force dirigée l'une contre l'autre pour que les segments se rencontrent au niveau des lignes de coupe ou de séparation.

3. Procédé selon la revendication 1 ou 2,
**caractérisé en ce qu'**
on soumet le profil (1, 20, 41) à une opération de cintrage concernant l'ensemble de la section du profilé.

4. Procédé selon l'une quelconque des revendications précédentes,
**caractérisé en ce qu'**
on effectue le cintrage dans un seul plan.

5. Procédé selon l'une quelconque des revendications précédentes,
**caractérisé en ce que**
dans une autre étape de procédé, on relie les segments (4, 5 ; 36, 37 ; 54, 55) au niveau de la ou des lignes de séparation (6, 7 ; 29 ; 44) ou des lignes de séparation et de coupe.

6. Procédé selon l'une quelconque des revendications précédentes,
**caractérisé en ce que**
le profil (1, 20, 41) présente un décrochement (3a, 3b ; 28 ; 52) suivant la ligne de séparation (6, 7 ; 29 ; 44) qui crée dans la direction transversale de la poutre un décalage des deux segments (4, 5 ; 36, 37 ; 54, 55) et le décrochement (3a, 3b ; 28 ; 52) est enlevé lorsqu'on ouvre le profil (1, 20, 41).

7. Procédé selon l'une quelconque des revendications précédentes à l'exception de la revendication 2,
**caractérisé en ce qu'**
on enlève au moins en partie la zone par laquelle l'un des segments (5, 36, 54) chevauche l'autre segment (4, 37, 55).

8. Procédé selon l'une quelconque des revendications précédentes,
**caractérisé en ce que**
l'on soude les segments (4, 5 ; 36, 37 ; 54, 55) le long de la ligne de séparation (6, 7 ; 29 ; 44) ou les lignes de coupure ou de séparation.

9. Procédé selon l'une quelconque des revendications précédentes,
**caractérisé en ce qu'**
on ouvre le profil (1) suivant deux lignes de séparation (6, 7) dans des zones de paroi du profil (1) sensiblement opposées, c'est-à-dire que l'on divise le profil (1) en deux segments (4, 5) et ensuite on glisse les deux segments (4, 5) le long des deux lignes de séparation (6, 7), l'un dans l'autre ou l'un par dessus l'autre.

10. Procédé selon l'une quelconque des revendications 1 à 8,
**caractérisé en ce qu'**
on ouvre le profil (20, 41) suivant une ligne de séparation (29, 44) et on recourbe un segment (36, 54) vers l'autre segment (37, 55).

11. Procédé selon la revendication 10,
**caractérisé en ce que**
le profil (20, 41) présente une zone limitée de section réduite (27, 47) fonctionnant comme zone de pliage pour l'un des segments (36, 54).

12. Procédé selon l'une quelconque des revendications précédentes,
**caractérisé en ce que**
la poutre (40) est un profilé extrudé en métal léger.

13. Procédé selon la revendication 12,
**caractérisé en ce que**
la poutre (40) est un profilé extrudé (41) ayant au moins deux chambres (42, 43).

14. Procédé selon l'une quelconque des revendications précédentes,
**caractérisé en ce que**
la poutre (40) constitue une colonne d'une carrosserie de véhicule.
